**Europäisches Patentamt**

**European Patent Office**

**Office européen des brevets**

(11) Publication number: **0 074 746**
**B1**

(12) **EUROPEAN PATENT SPECIFICATION**

(45) Date of publication of patent specification: **25.10.89**

(21) Application number: **82304548.9**

(22) Date of filing: **27.08.82**

(51) Int. Cl.⁴: **C 08 L 67/06,** C 08 L 67/00,
C 08 G 63/68, C 08 G 18/42,
C 08 G 18/48, C 08 G 18/67

(54) **Polyurethane oligomer impact and shrinkage modifiers for thermoset polyesters.**

(30) Priority: **03.09.81 US 298854**
**17.05.82 US 378664**

(43) Date of publication of application:
**23.03.83 Bulletin 83/12**

(45) Publication of the grant of the patent:
**25.10.89 Bulletin 89/43**

(84) Designated Contracting States:
**BE DE FR GB IT NL SE**

(56) References cited:
**EP-A-0 009 761**
**EP-A-0 039 588**
**DE-A-1 915 800**
**DE-A-3 007 614**
**US-A-4 062 826**

The file contains technical information
submitted after the application was filed and
not included in this specification

(73) Proprietor: **OLIN CORPORATION**
**350 Knotter Drive P.O. Box 586**
**Cheshire, CT 06410-0586 (US)**

(72) Inventor: **O'Connor, James Michael**
**8 Kenilworth Drive**
**Clinton Connecticut 06413 (US)**
Inventor: **Lickei, Donald Lee**
**38 Hallmark Drive**
**Wallingford Connecticut 06492 (US)**
Inventor: **Rosin, Michael Lee**
**4 Wilshire Road**
**Madison Connecticut 06443 (US)**

(74) Representative: **Thomas, Roger Tamlyn et al**
**D. Young & Co. 10 Staple Inn**
**London WC1V 7RD (GB)**

## Description

This invention relates to a thermosetting polyester resin composition; and, more particularly, to a thermosetting polyester resin composition which includes a select polyurethane oligomer to improve impact properties and surface characteristics. The invention also extends to the oligomers themselves, processes for preparing the thermoset compositions and thermoset polyester compositions and articles so prepared.

In recent years, there has been a steady increase in the use of reinforced plastic materials for exterior components in automotive construction. Further increases in the utilization of plastics can be expected as automobile manufactures continue to strive to meet vehicle weight reduction goals.

In the area of rigid plastic automotive components, fiberglass reinforced thermosetting polyester resins have been extensively employed. This can be attributed to their overall physical capabilities (e.g., dimensional stability, strength, high temperature resistance and paint adhesion). Other advantages include facility of handling and machining. However, these polyester systems still present certain deficiencies such as a brittle nature, which can lead to severe impact and fatigue problems. There is also a need to improve surface characteristics and shrinkage control.

To overcome these problems, various additives have been introduced into polyester sheet molding compounds (SMC) and bulk molding compounds (BMC). For example, in U.S. Patent (US—A—) No. 4,020,036 issued to Aubrey South, Jr. on April 26, 1977, liquid polymers, such as polybutadiene, are added in order to toughen polyester products. However, since these materials are not inherently compatible with polyester, these additives cannot be added to the polyester until it is time to mix the resin with the fiberglass. Saturated diacids or long-chain glycols also have been used in preparing polyester resins; the resulting products have been flexibilized, but, at the cost of lower mechanical and thermal properties.

Another approach involves the introduction of urethane systems into polyester resins. In U.S. Patent (US—A—) No. 4,062,826 issued to Francis Gowland Hutchinson et al. on December 13, 1977, precursors of a cross-linked polyurethane are polymerized within a mixture of ethylenically unsaturated polyester and vinyl monomer to form a product with an interpenetrating polurethane gel network within the polyester cross-linked structure. While higher impact properties are reported to be achieved, the fine surface finish required for automotive body part applications is not accomplished. See Forger, G., *Toughened SMC,* Plastics World, page 63 (June 1978).

European Patent Application (EP—A—) 9761 discloses that unsaturated polyester resins containing polyesterurethanes having free carboxyl groups and/or terminal radically polymerizable double bonds are good starting materials for manufacturing molded articles with desirable properties, particularly with good impact strength. One method described comprises reacting a polyurethane with a dicarboxylic acid anhydride but this is not the preferred method of making the polyester urethane additive. The additive also must have an acid number of at least 8.

Thus, there is a need in the art for an improved additive for polyester resin systems which will impart high impact properties and low shrink characteristics.

Now, according to the invention, it has been discovered that good properties can be achieved by incorporating a particular polyurethane oligomer system into a conventional thermosetting polyester resin formulation. Using such an oligomer system a molded plastic product may be produced which has enhanced impact properties as well as low shrinkage to ensure satisfactory surface characteristics.

According to one aspect, the invention provides a thermosetting polyester resin composition comprising a polyester resin, a heat activatable free radical generating catalyst, at least one of a reinforcing agent or a filler, and a polyurethane oligomer, said polyurethane oligomer having a final free OH content of from 0 to 5 percent and an acid number which is less than 8 and having been prepared by reacting.

(a) a hydroxy-terminated prepolymer which is the reaction product of an organic polyisocyanate with a polyol having an average molecular weight of 300 to 10,000 in an equivalent ratio of NCO to OH in the range from 0.3/1 to 0.99/1 with

(b) a dicarboxylic acid anhydride.

Preferably the composition includes a copolymerizable solvent and from 6 to 42 parts by weight of said oligomer per 100 parts by weight of polyester resin plus copolymerizable solvent. More preferred is a composition which includes from 14 to 35 parts by weight of said polyurethane oligomer per 100 parts by weight of polyester resin plus copolymerizable solvent, and wherein said polyurethane oligomer has a final free OH content from 0 to 1 percent and has been prepared by reacting

(a) a hydroxyl-terminated prepolymer which is the reaction produce of toluene diisocyanate with a polyester polyol having an average molecular weight of 500 to 6,500 in an equivalent ratio of NCO to OH in the range from 0.60/1 to 0.99/1 with

(b) a dicarboxylic acid anhydride selected from unsubstituted maleic anhydride, succinic anhydride, and glutaric anhydride.

According to another aspect, the invention provides a process for preparing a thermoset polyester resin composition comprising mixing a polyester resin, a heat activatable free radical generating catalyst, at least one of a reinforcing agent or a filler and a polyurethane oligomer, and then heating said mixture at a temperature adequate to activate said catalyst and cure said mixture, said polyurethane oligomer having a final free OH content from 0 to 5 percent and an acid number which is less than 8 and having been prepared by reacting

(a) a hydroxyl-terminated prepolymer which is the reaction product of an organic polyisocyanate with a polyol having an average molecular weight of 300 to 10,000 in an equivalent ratio of NCO to OH in the range from 0.3/1 to 0.99/1 with

(b) a dicarboxylic acid anhydride.

According to a further aspect, the invention provides a polyurethane oligomer which has a final free OH content from 0 to 5 percent and an acid number which is less than 8 and which has been prepared by reacting

(a) a hydroxyl-terminated prepolymer which is the reaction product of an organic polyisocyanate with a polyol having an average molecular weight of 300 to 10,000, in an equivalent ratio of NCO to OH in the range from 0.3/1 to 0.99/1 with

(b) a dicarboxylic acid anhydride.

Preferred embodiments and features of the invention will now be described.

The polyurethane oligomer employed according to the present invention is formed by the reaction of a hydroxyl-terminated prepolymer with a dicarboxylic acid anhydride. Generally, the resulting oligomers of controlled molecular weight are readily miscible with polyester resins and hence do not present pre-mix incompatibility storage problems. When the polyurethane oligomer-polyester resin system is processed and molded, upon curing the molded product, the oligomers seem to phase out and form separate pockets or centers within the thermoset polyester matrix. The inclusion of the flexible polyurethane oligomer accomplishes a significant improvement in impact properties. Moreover, the unique behavior of the oligomers during polyester cure tends to relieve strain and thus prevent shrinkage and accompanying surface defects.

The polyurethane oligomer is prepared by first reacting an organic polyisocyanate with a polyol in an equivalent ratio of NCO/OH from 0.3/1 to 0.99/1, using standard procedures, to yield a hydroxyl-terminated prepolymer of controlled molecular weight. Preferably, the NCO/OH ratio is from 0.60/1 to 0.99/1. Common urethane catalysts, e.g. tertiary amines and metal compounds such as stannous octoate, dibutyltin dilaurate or dibutyl di (lauryl mercapto) tin may be used to accelerate the reaction. In forming the prepolymer, other ingredients, such as chain extenders, well known to those in the polyurethane art, also may be included in the reaction mixture. These chain extenders include low molecular weight glycols such as ethylene glycol, butane diol, hexane diol, propylene glycol, bisphenol A, and the like.

The polyol reactant used in the prepolymer formation includes polyether polyols and polyester polyols and mixtures of two or more such compounds. The polyol, or mixture of polyols, should have an average molecular weight of from 300 to 10,000. Preferably, the average molecular weight is from 500 to 6,500. The average functionality of the polyol or polyol blend is usually 2 to 6, and preferably 2 to 3.

Polyester polyols are the preferred polyol reactant. Suitable polyester polyols include the products of reacting polycarboxylic acids with polyhydric alcohols. Illustrative polycarboxylic acids include, for example, oxalic, malonic, succinic, glutaric, adipic, pimelic, suberic, azelaic, phthalic and isophthalic acids, and mixtures thereof. Illustrative polyhydric alcohols include various diols, triols, tetrols and higher functionality alcohols, such as ethylene glycol, diethylene glycol, 1,3-propylene glycol, 1,2-propylene glycol, butylene glycols, butane diols, pentane diols, glycerol, trimethylolpropane, trimethylolhexane, pentaerythritol, sorbitol, hexane 1,2,6-triol, 2-methyl glucoside, and mixtures thereof.

Suitable polyether polyols include various polyoxyalkylene polyols and mixtures thereof. These can be prepared, according to well-known methods, by condensing an alkylene oxide, or a mixture of alkylene oxides using random or step-wise addition, with a polyhydric initiator or a mixture of polyhydric initiators. Illustrative alkylene oxides include ethylene oxide, propylene oxide, butylene oxide, amylene oxide, aralkylene oxides such as styrene oxide, and the halogenated alkylene oxides such as trichlorobutylene oxide. The most preferred alkylene oxide is propylene oxide or a mixture thereof with ethylene oxide using random or step-wise oxyalkylation.

The polyhydric initiator used in preparing the polyether polyol reactant includes the following and mixtures thereof: (a) the aliphatic diols such as ethylene glycol, 1,3-propylene glycol, 1,2-propylene glycol, butylene glycols, butane diols, and pentane diols, (b) the aliphatic triols such as glycerol, trimethylolpropane, triethylolpropane, and trimethylolhexane; (c) higher functionality alcohols such as sorbitol, pentaerythritol, and methyl glucoside; (d) the polyamines such as tetraethylene diamine; and (e) the alkanolamines such as diethanolamine and triethanolamine.

A preferred group of polyhydric initiators for use in preparing the polyether polyol reactant is one which comprises aliphatic diols and triols such as ethylene glycol, propylene glycol, glycerol, and trimethylolpropane.

The alkylene oxide-polyhydric initiator condensation reaction is preferably carried out in the presence of a catalyst such as KOH as is well known in the art. In effecting the reaction, a sufficient proportion of alkylene oxide is used as to provide a final polyol product having an average molecular weight of 300 to 10,000, preferably 500 to 6,500, and more preferably 2,000 to 4,000. The catalyst is thereafter preferably removed, leaving a polyether polyol which is ready for use in preparing the hydroxyl-terminated prepolymer of the invention.

Any suitable organic polyisocyanate, or mixture of polyisocyanates, may be used in the polyurethane

EP 0 074 746 B1

prepolymer formation including toluene diisocyanate, such as the 80:20 and the 65:35 mixtures of the 2,4- and 2,6-isomeric forms, ethylene diisocyanate, propylene diisocyanate, methylene-bis (4-phenyl isocyanate), methylene - bis (4 - cyclohexyl) isocyanate, xylene diisocyanate, 3,3' - bitoluene - 4,4' - diisocyanate, hexamethylene diisocyanate, naphthalene 1,5 - diisocyanate, isophorone diisocyanate, the polymeric isocyanates such as polyphenylene polymethylene isocyanate, and mixtures thereof. In accordance with a particularly preferred embodiment of the invention, there is employed an isomeric mixture of 2,4- and 2,6 - toluene diisocyanate in which the weight ratio of the 2,4 - isomer to the 2,6 - isomer is from 60:40 to 90:10, and more preferably, from 65:35 to 80:20.

To form the polyurethane oligomer that is utilized according to the invention, the prepared hydroxyl-terminated prepolymer, as defined above, is then reacted with an anhydride derived from a dicarboxylic acid. The reaction is carried out using methods well known in the art and employing such relative proportions of the reactants so as to achieve an oligomer product having a final free OH content preferably of from 0 to 5 percent, and most preferably from 0 to 1 percent. Any suitable anhydride which is derived from an aliphatic or aromatic dicarboxylic acid may be used. The anhydride which is employed may be unsubstituted or it may be substituted with any of a variety of substituents, e.g., alkyl, halo, haloalkyl, cycloaliphatic, aryl. Illustrative dicarboxylic acid anhydrides include: aliphatic dicarboxylic acid anhydrides such as maleic anhydride, succinic anhydride, glutaric anhydride, citraconic anhydride, 2,3 - dimethylmaleic anhydride, camphoric anhydride, cis - 1,2 - cyclohexane dicarboxylic anhydride; and aromatic dicarboxylic acid anhydrides such as phthalic anhydride, homophthalic anhydride, and trimellitic anhydride. Preferred dicarboxylic acid anhydrides for use in the practice of the invention include unsubstituted and substituted maleic anhydrides, succinic anhydrides and glutaric anhydrides. Unsubstituted maleic anhydride, succinic anhydride and glutaric anhydride ar the most preferred. By reaction of the hydroxyl-containing prepolymer with the dicarboxylic acid anhydride, a controlled molecular weight polyurethane oligomer with terminal carboxylic acid groups is produced.

Preferably, the reaction is carried out in the presence of a reactive copolymerizable solvent. Suitable copolymerizable solvents include vinylidene compounds such as styrene, vinyl toluene, methacrylic esters, acrylic esters, and divinyl benzene, familiar to those skilled in the art. The amount of copolymerizable solvent employed may be varied over a wide range. Generally, however, the copolymerizable solvent is employed in an amount of from 0 to 90 parts, and preferably from 40 to 70 parts, by weight per 100 parts by weight of the polyurethane oligomer plus copolymerizable solvent.

The described polyurethane oligomer is incorporated into thermosetting polyester resin formulations. These polyester resins include conventional polyesters as well as hybrid polyesters such as vinyl esters. The oligomer modifier additive can be used in any effective proportion. Preferably, the oligomer is added in a proportion of from 6 to 42 parts by weight per 100 parts by weight of polyester resin plus copolymerizable solvent. Most preferably, the oligomer comprises from 14 to 35 parts by weight per 100 parts by weight of the polyester resin plus copolymerizable solvent. The thermosetting polyester resins generally are prepared by reacting dicarboxylic acids or their anhydrides with polyhydric alcohols, using methods and reactants well known to those skilled in the art of polyester technology. Typical reactants include diacids and anhydrides such as phthalic acid, phthalic anhydride, maleic acid, maleic anhydride, and the like and glycols, such as ethylene glycol, diethylene glycol, propylene glycol, butylene glycol, butane diol, and hexane diol.

The polyurethane oligomer-containing polyester resin system is polymerized and cured in the presence of a heat activated, free radical generating catalyst. The actual curing conditions may vary over wide ranges and are generally dependent on the nature and amount of the particular catalyst employed. Suitable free radical generating catalysts include peroxide or azo type compounds, known to those in the art. Typical peroxide catalysts are illustrated by organo peroxides and hydroperoxides such as benzoyl peroxide, dicumyl peroxide, methyl ethyl ketone peroxide, lauryl peroxide, cyclohexanone peroxide, t-butyl perbenzoate, t-butyl hydroperoxide, t-butylbenzene hydroperoxide, cumene hydroperoxide, and t-butyl peroctoate. Typical azo compounds are azobis - isobutyronitrile, 2 - t - butylazo - 2 - cyano - 4 - methylpentane, and 4 - t - butylazo - 4 - cyano - valeric acid. The preferred catalysts are peroxide catalysts. In particular, preferred peroxide catalysts are t-butyl peroctoate, t - butyl perbenzoate, and mixtures thereof. Any suitable catalytic amount may be employed; however, the catalyst generally is used in an amount from 0.1 to 10 parts by weight per 100 parts by weight of polyester, solvent and polyurethane oligomer.

The composition of the present invention also contains at least one of a filler or a reinforcement material, and preferably both. Any material known to those in the art as being suitable as a filler may be employed. Generally, a variety of materials, e.g., finely divided solids including $CaCO_3$, clay, alumina, talc, and glass microspheres, may be utilized. Also, any suitable reinforcement material may be used, such as chopped fiberglass, carbon fibers, asbestos fibers, and boron nitride whiskers. The amount of filler generally included in the formulation may vary considerably, but is usually ranged from 50 to 500, and preferably from 80 to 250, parts by weight per 100 parts by weight of the polyester resin, polyurethane oligomer, and copolymerizable solvent. The amount of reinforcing agent added to the formulation may also vary over a wide range; however, a typical formulation will generally contain from 20 to 300, and preferably from 75 to 200, parts by weight per 100 parts by weight of the polyester resin, polyurethane oligomer, and copolymerizable solvent.

4

The composition also may include other standard ingredients, if desired, such as internal mold release agents, e.g., calcium, zinc, magnesium, or sodium stearate. Other low shrink or impact additives also may be included, if desired. Pigments, dyes, stabilizers, thixotropes, wetting agents, viscosity modifiers (e.g., Group II metal oxides and hydroxides, such as magnesium oxide) and various other additives familiar to those skilled in thermosetting polyester technology also may be added.

The following examples are provided to further illustrate the invention. All parts are by weight unless otherwise specified.

Preparation of polyurethane oligomer

Example 1

A. A 2-liter reaction flask equipped with stirrer, thermometer and addition funnel was charged with 261 grams (3.0 eq.) of diisocyanate①. The diisocyanate was heated to 70°C, and 1,486.75 grams (1.5 eq.) of a polyether polyol② were added via the addition funnel. After completion of the addition, the mixture was stirred for 3 hours at 80°C.

B. A 2-liter reaction flask equipped with stirrer, thermometer and addition funnel was charged with 164.9 grams (0.15 eq.) of the prepolymer prepared in A. The prepolymer was heated to 70°C, and 2.32 grams (0.02 eq.) of hydroxyethyl acrylate followed by 100 grams of styrene were added via the addition funnel. The resulting mixture was stirred at 70°C for 3 hours. At that time 171.1 grams (0.16775 eq.) of a polyether polyol③ followed by 413.1 grams of styrene were added. The reaction was catalyzed by the addition of 1.71 grams of a catalyst④, and the reaction mixture was held at 70°C for 3 hours. At that time 3.70 grams (0.03775 eq.) of maleic anhydride were added, and the mixture was stirred for 2 additional hours at 75—80°C. The resulting material had a viscosity of 752 cps (0.752 Pa · s) at 24°C.

① This is a mixture of toluene diisocyanate isomers (80:20 mixture of 2,4/2,6-isomers).
② This is a triol having a molecular weight of about 3,000 and prepared by oxypropylating glycerin to a final hydroxyl number of about 56.6.
③ This is a diol having a molecular weight of about 2,000 and prepared by oxypropylating propylene glycol to a final hydroxyl number of about 55.0.
④ This is dibutyl di (lauryl mercapto) tin and is a commercial product of Witco Chemical Corporation purchased under the designation "Fomrez UL-1".

Example 2

A one-liter flask equipped with stirrer, thermometer and addition funnel was charged with a 8.0 grams (0.0079 eq.) of a polyether polyol①, 27.65 grams of styrene, 16.38 grams (0.1882 eq.) of diisocyanate② and 0.09 grams of a catalyst③. The mixture was heated to 70°C, and stirred at 70°C for 3 hours. The reaction mixture was cooled to room temperature, and 192 grams (0.2012 eq.) of a polyether polyol④ followed by 300 grams of styrene were added. An additional 1.0 gram of catalyst③ was added, and the mixture was reheated to 70°C. The reaction mixture was stirred at 70°C for one hour. At that point 2.05 grams (0.0209 eq.) of maleic anhydride were added, and the mixture was stirred for an additional 2 hours at 70°C. The resulting material had a viscosity of 7,220 cps (7.22 Pa · s) at 25°C.

① This is a triol having a molecular weight of about 3,000 and prepared by oxypropylating glycerin to a final hydroxyl number of about 56.6.
② This is a mixture of toluene diisocyanate isomers (80:20 mixture of 2,4/2,6-isomers).
③ This is dibutyl di(lauryl mercapto) tin and is a commercial product of Witco Chemical Corporation purchased under the designation "Fomrez UL-1".
④ This is a polytetramethylene ether glycol having a molecular weight of about 2,000 and a hydroxyl number of about 58.8. It is a commercial product of The Quaker Oats Company purchased under the designation "Polymeg 2000".

Example 3

A 2-liter reaction flask equipped with stirrer, thermometer and addition funnel was charged with 388 grams (0.2587 eq.) of a polyester polyol①, 12.20 grams (0.0115 eq.) of a second polyester polyol② and 439.12 grams of styrene. The mixture was heated to 60°C, and 19.98 grams (0.2297 eq.) of diisocyanate③ followed by 200 grams of styrene were added. The reaction was catalyzed by the addition of 2.12 grams of a catalyst④. The resulting mixture was stirred at 75—80°C for 2 hours, at which point 3.98 grams (0.0406 eq.) of maleic anhydride were added. The resulting mixture was stirred for 2 additional hours at 75—80°C. The resulting material had a viscosity of 970 cps (0.97 Pa · s) at 26°C.

① This is a diethylene glycol adipate having a molecular weight of about 3,000 and a hydroxyl number of about 37.4. It is a commercial product of Hooker Chemical Corporation purchased under the designation "Rucoflex S-1011-35".

② This is a diethylene glycol adipate derived from glycerin and diethylene glycol and having a molecular weight of about 3,000 and a hydroxyl number of about 52.3. It is a commercial product of Hooker Chemical Corporation purchased under the designation "Rucoflex F-203".

③ This is a mixture of toluene diisocyanate isomers (80:20 mixture of 2,4/2,6-isomers).

④ This is dibutyl di (lauryl mercapto) tin and is a commercial product of Witco Chemical Corporation purchased under the designation "Fomrez UL-1".

Polyester molding

Examples 4—8

Thermoset polyester formulations were prepared containing polyurethane oligomers prepared according to Examples 1—3. The polyester molding formulation used is listed in Table I below. The following procedure was followed in the preparation of the cured composites.

a. Into a high shear mixing device were added the polyester resin and polyurethane oligomer.

b. The filler, thickener and catalyst were added and mixed until a homogeneous paste was achieved.

c. Next chopped fiberglass was added gradually to the paste in a two-roll mill and the mix was worked the minimal length of time to achieve good wet out of the glass without significant breakdown.

d. The uncured mix was then placed in a mold between the platens of a compression molding machine and cured under pressure (1,000 psi=6.9×10⁶ Pa) for three minutes at 300—325°F (149—163°C).

e. Alternatively to (d), the mixture may be added by a hopper device to the screw system of an injection molding device to produce an injection molded part, or the mix may be made up on an SMC machine for later compression or injection molding.

The physical properties of panels prepared in this manner are included in Table II below. The physical properties were determined in accordance with standard test procedures; Flexural modulus and flexural strength—ASTM D790; tensile strength—ASTM D3574; and falling dart impact—ASTM D3029.

TABLE I
Polyester molding formulation (BMC)

| Component | Parts by weight |
|---|---|
| Polyester resin① | 55 |
| Tertiary butyl peroxybenzoate | 0.67 |
| Tertiary butyl peroxyoctoate② | 0.33 |
| Calcium carbonate | 160 |
| Magnesium oxide | 0.8 |
| 1/2 Inch (12.7 mm) glass | 112 |
| Polyurethane oligomer | 18 |
| Styrene | 27 |

① Commercially available from Owens-Corning Fiberglass under the designation "P-340".

② Commercially available from Lupersol Co. under the designation "PDO", understood to consist of 50% tertiary butyl peroxyoctoate and 50% dioctyl phthalate.

Comparative Example 1

A thermoset polyester resin was prepared following the procedure of Examples 4—8. The molding formulation employed was as follows:

| Component | Parts by weight |
|---|---|
| Polyester resin① | 65 |
| Tertiary butyl peroxybenzoate | 0.67 |
| Tertiary butyl peroxyoctoate② | 0.33 |
| Calcium carbonate | 160 |
| Magnesium oxide | 0.8 |
| 1/2 Inch (12.7 mm) glass | 112 |
| Low shrink additive③ | 35 |

① Commercially available from Owens-Corning Fiberglass under the designation "P-340".
② Commercially available from Lupersol Co. under the designation "PDO", understood to consist of 50% tertiary butyl peroxyoctoate and 50% dioctyl phthalate.
③ Commercially available from Owens-Corning Fiberglass under the designation "P-701".

The physical properties of the panel prepared in this manner are included in Table II below. The physical properties were determined in accordance with standard test procedures: Flexural modulus and flexural strength—ASTM D790; tensile strength—ASTM D3574; and falling dart impact—ASTM D3029.

## TABLE II
### Physical properties of composites

| Example | Polyurethane oligomer | Tensile strength in psi (Pa×$10^6$) | Flexural strength in psi (Pa×$10^6$) | Flexural modulus×$10^6$ in psi (Pa×$10^3$) | Falling dart impact[1] in-lb (cm-kg) | Surface[2] (1—5) |
|---|---|---|---|---|---|---|
| 6 | Example 1 | 3400 (23.5) | 9,900 (68.3) | 1.1 (7.6) | 53 (61) | 2.0 |
| 7 | Example 2 | 5800 (34.8) | 8,400 (58) | 0.91 (6.3) | 45 (51.8) | 4.0 |
| 8 | Example 3 | 6000 (41.4) | 10,900 (75.2) | 1.0 (6.9) | 56 (64.4) | 5.0 |
| CE-1 | — | 8500 | 12,700 | 1.6 | 24 | 4.5 |

[1] Failure judged by the appearance of a crack one-eighth inch (3.2 mm) in length on the side opposite the impact.

[2] The surface of is rated subjectively from 1—5, 5 having the smoothness of glass, while 1 is a fairly rough and uneven surface.

Preparation of polyurethane oligomer
Example 9

A 10-gallon reactor was charged with 26780 grams of styrene, 876 grams (0.812 eq.) of a polyester polyol①, 16103 grams (10.05 eq.) of a second polyester polyol② and 2.353 grams of hydroquinone. The contents of the reactor were mixed thoroughly for 20 minutes and 841.2 grams (9.67 eq.) of diisocyanate③ followed by 89.9 grams of a catalyst④ were added. The resulting mixture was heated to 70°C and was mixed at 70—75°C for 1 hour, at which point 4.513 grams of hydroquinone and 167.5 grams (1.71 eq.) of maleic anhydride were added. This mixture was mixed at 70—75°C for 2 hours and then cooled to ambient temperature. A mixture of 2.355 grams of 4-tertiary butyl catechol and 4.51 grams of para-benzoquinone was then added and mixed in thoroughly.

① This is a diethylene glycol adipate derived from glycerin and diethylene glycol and having a molecular weight of about 3,000 and a hydroxyl number of about 52. It is a commercial product of Hooker Chemical Corporation purchased under the designation "Rucoflex F-203".
② This a diethylene glycol adipate having a molecular weight of about 3,000 and a hydroxyl number of about 35. It is commercial product of Hooker Chemical Corporation purchased under the designation "Rucoflex S-1011-35".
③ This is a mixture of toluene diisocyanate isomers (80:20 mixture of 2,4/2,6-isomers).
④ This is a dibutyl di (lauryl mercapto) tin and is a commercial product of Witco Chemical Corporation purchased under the designation "Fomrez UL-1".

Example 10

A five-liter reaction flask equipped with stirrer, thermometer and addition funnel was charged with 1358 grams (0.908 eq.) of a polyester polyol①, 42 grams (0.040 eq.) of a second polyester polyol②, 2026 grams of styrene, and 0.186 grams of hydroquinone. To this mixture were added 70.07 grams (0.805 eq.) of diisocyanate③, 7.42 grams of a catalyst④, and 200 grams of styrene. The mixture was heated to 75°C and was stirred at 75°C for 30 minutes. At this point, 0.372 grams of hydroquinone and 14.22 grams (0.142 eq.) of succinic anhydride were added. The resulting mixture was stirred at 75°C for 2 hours, cooled to room temperature, and 0.372 grams of para-benzoquinone and 0.186 grams of 4-tertiary butyl catechol were added to the mixture. The oligomer had a viscosity of 945 cps (0.945 Pa · s) at 26°C.

① This is a diethylene glycol adipate having a molecular weight of about 3,000 and a hydroxyl number of about 37.5. It is a commercial product of Hooker Chemical Corporation purchased under the designation "Rucoflex S-1011-35".
② This is a diethylene glycol adipate derived from glycerin and diethylene glycol and having a molecular weight of about 3,000 and a hydroxyl number of about 53.2. It is a commercial product of Hooker Chemical Corporation purchased under the designation "Rucoflex F-203".
③ This is a mixture of toluene diisocyanate isomers (80:20 mixture of 2,4/2,6-isomers).
④ This is dibutyl di (lauryl mercapto) tin and is a commercial product of Witco Chemical Corporation purchased under the designation "Fomrez UL-1".

Example 11

A one-liter reaction flask equipped with stirrer, thermometer and addition funnel was charged with 194 grams (0.130 eq.) of a polyester polyol①, 6 grams (0.006 eq.) of a second polyester polyol②, 218 grams of styrene, and 0.027 grams of hydroquinone. To this mixture were added 10.01 grams (0.115 eq.) of diisocyanate③, 70 grams of styrene, and 1.06 grams of a catalyst④. The mixture was heated to 75°C and was stirred at 75°C for 30 minutes. At this point 0.053 grams of hydroquinone and 2.27 grams (0.020 eq.) of citraconic anhydride were added. The resulting mixture was stirred at 75°C for 2 hours and cooled to room temperature. To the cooled mixture were added 0.053 grams of para-benzoquinone and 0.027 grams of 4-tertiary butyl catechol. The resultant mixture had a viscosity of 960 cps (0.96 Pa · s) at 28°C.

① This is a diethylene glycol adipate having a molecular weight of about 3,000 and a hydroxyl number of about 37.5. It is a commercial product of Hooker Chemical Corporation purchased under the designation "Rucoflex S-1011-35".
② This is a diethylene glycol adipate derived from glycerin and diethylene glycol and having a molecular weight of about 3,000 and a hydroxyl number of about 53.2. It is a commercial product of Hooker Chemical Corporation purchased under the designation "Rucoflex F-203".
③ This is a mixture of toluene diisocyanate isomers (80:20 mixture of 2,4/2,6-isomers).
④ This is dibutyl di (lauryl mercapto) tin and is a commercial product of Witco Chemical Corporation purchased under the designation "Fomrez UL-1".

Examples 12—14

Additional polyurethane oligomers were prepared employing the same reactants and conditions as outlined in Example 11, except that different dicarboxylic acid anhydrides were used as follows:

| Example No. | Dicarboxylic acid anhydride | Amount of dicarboxylic acid anhydride (eq.) | Viscosity of oligomer product (cps=Pa · s×10³) |
|---|---|---|---|
| 12 | Glutaric anhydride | 0.020 | 820 (at 26°C) |
| 13 | Tetrahydro-phthalic anhydride | 0.020 | 970 (at 24°C) |
| 14 | Phthalic anhydride | 0.020 | 870 (at 25°C) |

Polyester molding
Examples 15—20

Thermoset polyester formulations were prepared containing polyurethane oligomers prepared according to Examples 9—14. The polyester molding formulation used is listed in Table III below. The following procedure was followed in the preparation of the cured composites.

a. Into a high shear mixing device were added the polyester resin and polyurethane oligomer.

b. The filler, thickener and catalyst were added and mixed until a homogeneous paste was achieved.

c. Next chopped fiberglass was added gradually to the paste and mixed in carefully by hand. The paste-fiberglass mixture was placed between two polyethylene sheets and was rolled flat with a rolling pin.

d. The uncured mix was stored between the polyethylene sheets for one day to allow maturation to take place.

e. The uncured mix was then placed in a mold between the platens of a compression molding machine and cured under pressure (1,000 psi=6.9×10⁶ Pa) for three minutes at 300—325°F (149—163°C).

f. Alternatively to (e), the mixture may be added by a hopper device to the screw system of an injection molding device to produce an injection molded part, or the mix may be made up on an SMC machine for later compression or injection molding.

The physical properties of panels prepared in this manner are included in Table III below. The physical properties were determined in accordance with standard test procedures: Flexural modulus and flexural strength—ASTM D790; tensile strength—ASTM D3574; and falling dart impact—ASTM D3029.

TABLE III
Polyester molding formulation

| Component | Parts by weight |
|---|---|
| Polyester resin① | 65 |
| Tertiary butyl peroxybenzoate | 0.65 |
| Tertiary butyl peroxyoctoate② | 0.35 |
| Calcium carbonate | 160 |
| Magnesium oxide | 0.8 |
| $\frac{1}{2}$ Inch (12.7 mm) glass | 112 |
| Polyurethane oligomer | 14 |
| Styrene | 21 |

① Commercially available from Owens-Corning Fiberglass under the designation "P-340".
② Commercially available from Lupersol Co. under the designation "PDO", understood to consist of 50% tertiary butyl peroxyoctoate and 50% dioctyl phthalate.

Comparative Example 2

A thermoset polyester resin was prepared following the procedure of Examples 15—21. The molding formulation employed was as follows:

# EP 0 074 746 B1

| Component | Parts by weight |
|---|---|
| Polyester resin① | 65 |
| Tertiary butyl peroxybenzoate | 0.67 |
| Tertiary butyl peroxyoctoate② | 0.33 |
| Calcium carbonate | 160 |
| Magnesium oxide | 0.8 |
| ½ Inch (12.7 mm) glass | 112 |
| Low shrink additive③ | 35 |

① Commercially available from Owens-Corning Fiberglass under the designation "P-340".
② Commercially available from Lupersol Co. under the designation "PDO", understood to consist of 50% tertiary butyl peroxyoctoate and 50% dioctyl phthalate.
③ Commercially available from Owens-Corning Fiberglass under the designation "P-701".

The physical properties of the panel prepared in this manner are included in Table IV below. The physical properties were determined in accordance with standard test procedures; Flexural modulus and flexural strength—ASTM D790; tensile strength—ASTM D3574; and falling dart impact—ASTM D3029.

11

TABLE IV
Physical properties of composites

| Example | Polyurethane oligomer | Tensile strength in psi (Pa$\times10^6$) | Flexural strength in psi (Pa$\times10^6$) | Flexural modulus$\times10^6$ in psi (Pa$\times10^3$) | Falling dart impact① in-lb (cm-kg) | Surface② (1—5) | Dimensional change③ ($10^{-3}$ in/in=cm/cm) | |
|---|---|---|---|---|---|---|---|---|
| | | | | | | | Width-wise | Length-wise |
| 15 | 9 | 5820 (40.2) | 14,500 (100) | 1.55 (7.6) | 8.4 (9.7) | 3 | 0.25 | 0.45 |
| 16 | 10 | 6370 (44) | 14,200 (98) | 1.66 (11.5) | 5.8 (6.7) | 2.5 | 0.20 | 0.45 |
| 17 | 11 | 3880 (26.8) | 7,600 (52.4) | 1.23 (8.5) | 7.0 (8.1) | 2.5 | 0.20 | 0.35 |
| 18 | 12 | 6320 (43.6) | 11,600 (80) | 1.35 (9.3) | 8.2 (9.4) | 2.5 | 0.25 | 0.35 |
| 19 | 13 | 6440 (44.4) | 15,900 (109.7) | 1.64 (11.3) | 6.8 (7.8) | 3.0 | 0.30 | 0.40 |
| 20 | 14 | 6290 (43.4) | 13,300 (91.8) | 1.43 (9.9) | 9.0 (10.4) | 3.0 | 0.25 | 0.35 |
| CE-2 | — | 8120 (56) | 16,200 (110.4) | 1.90 (11.0) | 7.0 (8.1) | 2.0 | — | — |

① Failure determined by the first appearance of a crack on the side opposite the impact.
② The surface is rated subjectively from 1—5, 5 having the smoothness of glass, while 1 is a fairly rough and uneven surface.
③ Dimensional change is determined for each example by first measuring an average length dimension and an average width dimension for the cured composite. An average length dimension and an average width dimension are also obtained for the cured panel of Comparative Example 2. The differences between the average lengths and average widths in each example, respectively, and Comparative Example 2 are reported in Table IV as dimensional change in units of $10^{-3}$ cm. per cm. of panel. A positive value demonstrates less shrinkage in the example panel than in the panel of Comparative Example 2.

**Claims**

1. A thermosetting polyester resin composition comprising a polyester resin, a heat activatable free radical generating catalyst, at least one of a reinforcing agent or a filler, and a polyurethane oligomer, said polyurethane oligomer having a final free OH content of from 0 to 5 percent and an acid number which is less than 8 and having been prepared by reacting

(a) a hydroxyl-terminated prepolymer which is the reaction product of an organic polyisocyanate with a polyol having an average molecular weight of 300 to 10,000, in an equivalent ratio of NCO to OH in the range from 0.3/1 to 0.99/1 with

(b) a dicarboxylic acid anhydride.

2. A composition according to Claim 1, including a copolymerizable solvent and from 6 to 42 parts by weight of said oligomer per 100 parts by weight of polyester resin plus copolymerizable solvent.

3. A composition according to Claim 2, which includes from 14 to 35 parts by weight of said polyurethane oligomer per 100 parts by weight of polyester resin plus copolymerizable solvent, and wherein said polyurethane oligomer has a final free OH content from 0 to 1 percent and has been prepared by reacting

(a) a hydroxyl-terminated prepolymer which is the reaction produce of toluene diisocyanate with a polyester polyol having an average molecular weight of 500 to 6,500 in an equivalent ratio of NCO to OH in the range from 0.60/1 to 0.99/1 with

(b) a dicarboxylic acid anhydride selected from unsubstituted maleic anhydride, succinic anhydride, and glutaric anhydride.

4. A process for preparing a thermoset polyester resin composition comprising mixing a polyester resin, a heat activatable free radical generating catalyst, at least one of a reinforcing agent or a filler and a polyurethane oligomer, and then heating said mixture at a temperature adequate to activate said catalyst and cure said mixture, said polyurethane oligomer having a final free OH content from 0 to 5 percent and an acid number which is less than 8 and having been prepared by reacting

(a) a hydroxyl-terminated prepolymer which is the reaction product of an organic polyisocyanate with a polyol having an average molecular weight of 300 to 10,000 in an equivalent ratio of NCO to OH in the range from 0.3/1 to 0.99/1 with

(b) a dicarboxylic acid anhydride.

5. A process according to Claim 4, wherein there is included in said mixture from 14 to 35 parts by weight of said oligomer per 100 parts by weight of polyester resin plus styrene copolymerizable solvent and wherein said oligomer has a final free OH content from 0 to 1 percent and has been prepared by reacting

(a) a hydroxyl-terminated prepolymer which is the reaction produce of toluene diisocyanate with a polyester polyol having an average molecular weight of 500 to 6,500 in an equivalent ratio of NCO to OH in the range from 0.60/1 to 0.99/1 with

(b) a dicarboxylic acid anhydride selected from unsubstituted maleic anhydride, succinic anhydride, and glutaric anhydride.

6. A thermoset polyester article wherein the thermoset polyester has been prepared by a process according to Claim 4 or 5.

7. A polyurethane oligomer which has a final free OH content from 0 to 5 percent and an acid number which is less than 8 and which has been prepared by reacting

(a) a hydroxyl-terminated prepolymer which is the reaction product of an organic polyisocyanate with a polyol having an average molecular weight of 300 to 10,000, in an equivalent ratio of NCO to OH in the range from 0.3/1 to 0.99/1 with

(b) a dicarboxylic acid anhydride.

8. A composition or oligomer according to Claim 1 or 7, wherein said reaction is carried out in the presence of a copolymerizable solvent.

9. A composition or oligomer according to Claim 8, wherein said copolymerizable solvent is styrene.

10. A composition or oligomer according to Claim 1 or 7, wherein said prepolymer is the reaction product of a polyisocyanate and a polyol in an equivalent ratio of NCO to OH in the range from 0.60/1 to 0.99/1.

11. A composition or oligomer according to Claim 1 or 7, wherein the final free OH content of said oligomer is from 0 to 1 percent.

12. A composition or oligomer according to Claim 1 or 7, wherein said dicarboxylic acid anhydride is selected from unsubstituted maleic anhydride, succinic anhydride, and glutaric anhydride.

13. A composition or oligomer according to Claim 1 or 7, wherein said prepolymer is prepared from a polyester polyol.

14. A composition or oligomer according to Claim 13, wherein said polyester polyol has an average molecular weight in the range from 500 to 6,500.

15. A composition or oligomer according to Claim 1 or 7, wherein said prepolymer is prepared by employing toluene diisocyanate as said organic polyisocyanate.

16. A composition or oligomer according to Claim 1 or 7, wherein said polyurethane oligomer has a final free OH content from 0 to 1 percent and has been prepared by reacting

## EP 0 074 746 B1

(a) a hydroxyl-terminated prepolymer which is the reaction product of toluene diisocyanate with a polyester polyol having an average molecular weight of 500 to 6,500 in an equivalent ratio of NCO to OH in the range from 0.60/1 to 0.99/1 with

(b) a dicarboxylic acid anhydride selected from unsubstituted maleic anhydride, succinic anhydride, and glutaric anhydride.

**Patentansprüche**

1. Durch Wärme härtbare Polyesterharz-Zusammensetzung mit einem Polyesterharz, einem durch Wärme aktivierbaren, freie Radikale erzeugenden Katalysator, mindestens einem Verstärkungsmittel oder einem Füllstoff und mit einem Polyurethan-Oligomer wobei dieses Polyurethan-Oligomer einen Gehalt an freien OH-Endgruppen von 0 bis 5% und eine Säurezahl aufweist, die kleiner ist als 8, und wobe es durch die Reaktion von

(a) einem Präpolymer mit Hydroxylendgruppen, das das Reaktionsprodukt eines organischen Polyisocyanats mit einem Polyol, das eine durchschnittliche Molmasse von 300 bis 10.000 aufweist, in einem Äquivalentverhältnis von NCO zu OH im Bereich von 0,3/1 bis 0,99/1 darstellt, mit

(b) einem Dicarbonsäureanhydrid hergestellt ist.

2. Zusammensetzung nach Anspruch 1, dadurch gekennzeichnet, daß sie ein copolymerisierbares Lösungsmittel und von 6 bis 42 Gewichtsteile des Oligomers pro 100 Gewichtsteile des Polyesterharzes mit dem copolymerisierbaren Lösungsmittel enthält.

3. Zusammensetzung nach Anspruch 2, dadurch gekennzeichnet, daß sie von 14 bis 35 Gewichtsteile des Polyurethan-Oligomers pro 100 Gewichtsteile des Polyesterharzes mit dem copolymerisierbaren Lösungsmittel enthält, und daß das Polyurethan-Oligomer einen Gehalt an freien OH-Endgruppen von 0 bis 1% aufweist und durch die Reaktion von

(a) einem Präpolymer mit Hydroxylendgruppen, das das Reaktionsprodukt von Toluoldiisocyanat mit einem Polyesterpolyol, das eine durchschnittliche Molmasse von 500 bis 6.500 aufweist, in einem Äquivalentverhältnis von NCO zu OH in dem Bereich von 0,60/1 bis 0,99/1 darstellt, mit

(b) einem Dicarbonsäureanhydrid, das aus unsubstituiertem Maleinsäureanhydrid, Succinsäureanhydrid und Glutarsäureanhydrid ausgewählt ist, hergestellt ist.

4. Verfahren zum Herstellen einer durch Wärme härtbaren Polyesterharz-Zusammensetzung durch Mischen eines Polyesterharzes, eines durch Wärme aktivierbaren, freie Radikale erzeugenden Katalysators, mindestens eines Verstärkungsmittels oder eines Füllstoffes und eines Polyurethan-Oligomers, und dann Erwärmen dieser Mischung auf eine Temperatur, die geeignet ist, dan Katalysator zu aktivieren und die Mischung zu härten, wobei das Polyurethan-Oligomer einen Gehalt an freien OH-Endgruppen von 0 bis 5% und eine Säurezahl aufweist, die kleiner ist als 8, und wobei das Polyurethan-Oligomer durch die Reaktion von

(a) einem Präpolymer mit Hydroxylengruppen, das das Reaktionsprodukt eines organischen Polyisocyanats mit einem Polyol, das eine durchschnittliche Molmasse von 300 bis 10.000 aufweist, in einem Äquivalentverhältnis von NCO zu OH in dem Bereich von 0,3/1 zu 0,99/1 darstellt, mit

(b) einem Dicarbonsäureanhydrid hergestellt ist.

5. Verfahren nach Anspruch 4, dadurch gekennzeichnet, daß diese Mischung von 14 bis 35 Gewichtsteilen des Oligomers pro 100 Gewichtsteilen des Polyesterharzes mit Styrol als copolymerisierbarem Lösungsmittel enthält und daß das Oligomer einen Gehalt an freien OH-Endgruppen von 0 bis 1% aufweist und durch die Reaktion von

(a) einem Präpolymer mit Hydroxylendgruppen, das das Reaktionsprodukt von Toluoldiisocyanat mit einem Polyesterpolyol, das eine durchschnittliche Molmasse von 500 bis 6.500 aufweist, in einem Äquivalentverhältnis von NCO zu OH in dem Bereich von 0,60/1 zu 0,99/1 darstellt, mit

(b) einem Dicarbonsäureanhdrid, das aus unsubstituiertem Maleinsäureanhydrid, Succinsäureanhydrid und Glutarsäureanhydrid ausgewählt ist, hergestellt ist.

6. Ein durch Wärme gehärteter Polyester-Gegenstand, dadurch gekennzeichnet, daß der durch Wärme gehärtete Polyester durch ein Verfahren nach Anspruch 4 oder 5 hergestellt ist.

7. Polyurethan-Oligomer mit einem Gehalt an freien OH-End-Gruppen von 0 bis 5% und einer Säurezahl, die kleiner ist als 8, und das hergestellt ist durch die Reaktion von

(a) einem Präpolymer mit Hydroxylendgruppen, das das Reaktionsprodukt eines organischen Polyisocyanats mit einem Polyol, das eine durchschnittliche Molmasse von 300 bis 10.000 aufweist, in einem Äquivalentverhältnis von NCO zu OH im Bereich von 0,3/1 bis 0,99/1 darstellt, mit

(b) einem Dicarbonsäureanhydrid.

8. Zusammensetzung oder Oligomer nach Anspruch 1 oder 7, dadurch gekennzeichnet, daß die Reaktion in Gegenwart eines copolymerisierbaren Lösungsmittels durchgeführt wird.

9. Zusammensetzung oder Oligomer nach Anspruch 8, dadurch gekennzeichnet, daß das copolymerisierbare Lösungsmittel Styrol ist.

14

10. Zusammensetzung oder Oligomer nach Anspruch 1 oder 7, dadurch gekennzeichnet, daß das Präpolymer das Reaktionsprodukt von einem Polyisocyanat und einem Polyol in einem Äquivalentverhältnis von NCO zu OH in dem Bereichvon 0,60/1 zu 0,99/1 ist.

11. Zusammensetzung oder Oligomer nach Anspruch 1 oder 7, dadurch gekennzeichnet, daß der Gehalt an freien OH-Gruppen des Oligomers von 0 bis 1% beträgt.

12. Zusammensetzung oder Oligomer nach Anspruch 1 oder 7, dadurch gekennzeichnet, daß das Dicarbonsäureanhydrid von unsubstituiertem Maleinsäureanhydrid, Succinsäureanhydrid und Glutarsäureanhydrid ausgewählt ist.

13. Zusammensetzung oder Oligomer nach Anspruch 1 oder 7, dadurch gekennzeichnet, daß das Präpolymer aus einem Polyester-polyol hergestellt ist.

14. Zusammensetzung oder Oligomer nach Anspruch 13, dadurch gekennzeichnet, daß das Polyesterpolyol eine durchschnittliche Molmasse im Bereich von 500 bis 6.500 aufweist.

15. Zusammensetzung oder Oligomer nach Anspruch 1 oder 7, dadurch gekennzeichnet, daß das Präpolymer durch Verwendung von Toluoldiisocyanat als dem organischen Polyestercyanat hergestellt ist.

16. Zusammensetzung oder Oligomer nach Anspruch 1 oder 7, dadurch gekennzeichnet, daß das Polyurethan-Oligomer einen Gehalt an freien OH-Gruppen von 0 bis 1% aufweist und hergestellt ist durch die Reaktion von

(a) einem Präpolymer mit Hydroxylendgruppen, das das Reaktionsprodukt von Toluoldiisocyanat mit einem Polyesterpolyol, das eine durchschnittliche Molmasse von 500 bis 6.500 aufweist, in einem Äquivalentverhältnis von NCO zu OH in dem Bereich von 0,60/1 bis 0,99/1 darstellt, mit

(b) einem Dicarbonsäureanhydrid, das aus unsubstituiertem Maleinsäureanhydrid, Succinsäureanhydrid und Glutarsäureanhydrid ausgewählt ist.

**Revendications**

1. Une composition de résine de polyester thermodurcissable, comprenant une résine de polyester, un catalyseur générateur de radicaux libres activable par la chaleur, au moins un agent de renforcement et/ou une charge et un polyuréthanne oligomère, ledit polyuréthanne oligomère ayant un teneur finale en groupes OH libres de 0 à 5% en un indice d'acide qui est inférieur à 8 et ayant été préparé en faisant réagir:

(a) un prépolymère à groupes hydroxyles terminaux qui est le produit de réaction d'un polyisocyanate organique avec un polyol ayant un poids moléculaire moyen de 300 à 10 000, dans un rapport d'équialent de NCO à OH ·dans la gamme de 0,3/1 à 0,99/1 avec

(b) un anhydride d'acide dicarboxylique.

2. Une composition selon la revendication 1, comprenant un solvant copolymérisable et de 6 à 42 parties en poids dudit oligomère par 100 parties en poids du total résine de polyester plus solvant copolymérisable.

3. Une composition selon la revendication 2, qui contient de 14 à 35 parties en poids dudit polyuréthanne oligomère par 100 parties en poids du total résine de polyester plus solvant copolymérisable, et dans laquelle ledit polyuréthanne oligomère a une teneur finale en groupes OH libres de 0 à 1% et a été préparé en faisant réagir

(a) un prépolymère à groupes hydroxyles terminaux qui est le produit de réaction du toluylènediisocyanate avec un polyesterpolyol ayant un poids moléculaire moyen de 500 à 6 500 dans un rapport d'équivalent de NCO à OH dans la gamme de 0,60/1 à 0,99/1 avec

(b) un anhydride d'acide dicarboxylique choisi parmi l'anhydride maléique, l'anhydride succinique et l'anhydride glutarique non substitués.

4. Un procédé pour préparer une résine de polyester thermodurcie, consistant à mélanger une résine de polyester, un catalyseur générateur de radicaux libres activable par la chaleur, au moins un agent de renforcement et/ou une charge et un polyuréthanne oligomère, et ensuite à chauffer ledit mélange à une température appropriée pour activer ledit catalyseur et durcir ledit mélange, ledit polyuréthanne oligomère ayant une teneur finale en groupes OH libres de 0 à 5% et un indice d'acide qui est inférieur à 8 et ayant été préparé en faisant réagir.

(a) un prépolymère à groupes hydroxyles terminaux qui est le produit de réaction d'un polyisocyanate organique avec un polyol ayant un poids moléculaire moyen de 300 à 10 000 dans un rapport d'équivalent de NCO à OH dans la gamme de 0,3/1 à 0,99/1 avec

(b) un anhydride d'acide dicarboxylique.

5. Un procédé selon la revendication 4, dans lequel ledit mélange contient 14 à 35 parties en poids dudit oligomère par 100 parties en poids du total résine de polyester plus solvant copolymérisable et dans lequel ledit oligomère a une teneur finale en groupes OH libres de 0 à 1% et a été préparé en faisant réagir

(a) un prépolymère à groupes hydroxyles terminaux qui est le produit de réaction du toluylènediisocyanate avec un polyesterpolyol ayant un poids moléculaire moyen de 500 à 6 500 dans un rapport d'équivalent de NCO à OH dans la gamme de 0,60/1 à 0,99/1 avec

(b) un anhydride d'acide dicarboxylique choisi parmi l'anhydride maléique, l'anhydride succinique, l'anhydride glutarique non substitués.

6. Un article en polyester thermodurci, dans lequel le polyester thermodurci a été préparé par un procédé selon la revendication 4 ou 5.

7. Un polyuréthanne oligomère qui a une teneur finale en groupes OH libres de 0 à 5% et un indice d'acide qui est inférieur à 8 et qui a été préparé en faisant réagir

(a) un prépolymère à groupes hydroxyles terminaux qui est le produit de réaction d'un polyisocyanate organique avec un polyol ayant un poids moléculaire moyen de 300 à 10 000 dans un rapport d'équivalent de NCO à OH dans la gamme de 0,3/1 à 0,99/1 avec

(b) un anhydride d'acide dicarboxylique.

8. Une composition ou un oligomère selon la revendication 1 ou 7, dans lesquels ladite réaction est mise en oeuvre en présence d'un solvant copolymérisable.

9. Une composition ou un oligomère selon la revendication 8, dans lesquels ledit solvant copolymérisable est le styrène.

10. Une composition ou un oligomère selon la revendication 1 ou 7, dans lesquels ledit prépolymère est le produit de réaction d'un polyisocyanate et d'un polyol dans un rapport d'équivalents de NCO à OH dans la gamme de 0,60/1 à 0,99/1.

11. Une composition ou un oligomère selon la revendication 1 ou 7, dans lesquels la teneur finale en groupes OH dudit oligomère est de 0 à 1%.

12. Une composition ou un oligomère selon la revendication 1 ou 7, dans lesquels ledit anhydride d'acide dicarboxylique est choisi parmi l'anhydride maléique, l'anhydride succinique et l'anhydride glutarique non substitués.

13. Une composition ou un oligomère selon la revendication 1 ou 7, dans lesquels ledit prépolymère est préparé à partir d'un polyesterpolyol.

14. Une composition ou un oligomère selon la revendication 13, dans lesquels ledit polyesterpolyol a un poids moléculaire moyen dans la gamme de 500 à 6 500.

15. Une composition ou un oligomère selon la revendication 1 ou 7, dans lesquels ledit prépolymère est préparé en utilisant le toluylènediisocyanate comme polyisocyanate organique.

16. Une composition ou un oligomère selon la revendication 1 ou 7, dans lesquels ledit polyuréthanne oligomère a une teneur finale en groupes OH libres de 0 à 1% et a été préparé en faisant réagir.

(a) un prépolymère à groupes hydroxyles terminaux qui est le produit de réaction du toluylènediisocyanate avec un polyesterpolyol ayant un poids moléculaire moyen de 500 à 6 500 dans un rapport d'équivalents de NCO à OH dans la gamme de 0,60/1 à 0,99/1 avec

(b) un anhydride d'acide dicarboxylique choisi parmi l'anhydride maléique, l'anhydride succinique et l'anhydride glutarique non substitués.